Europäisches Patentamt

European Patent Office

Office européen des brevets

(11) Publication number: **0 238 159**
**A1**

## EUROPEAN PATENT APPLICATION

(21) Application number: 87300168.9

(22) Date of filing: 09.01.87

(51) Int. Cl.⁴: **A01D 34/66**

(30) Priority: 22.01.86 GB 8601456

(43) Date of publication of application:
**23.09.87 Bulletin 87/39**

(84) Designated Contracting States:
**AT BE CH DE ES FR GB GR IT LI LU NL SE**

(71) Applicant: **Kidd Farm Machinery Limited Devizes**
**Wiltshire SN10 2HP(GB)**

(72) Inventor: **Barker, Malcolm McQuire Barker**
**"Callisto" Wick Lane**
**Devizes Wiltshire(GB)**

(74) Representative: **White, Malcolm Frank et al**
**MARKS & CLERK Alpha Tower Suffolk Street Queensway**
**Birmingham B1 1TT(GB)**

(54) **Mowing machine.**

(57) This invention relates to a mowing machine for cutting grass or other crops, the machine being of the kind which is intended in use to be traversed over a standing crop by means of an agricultural tractor.

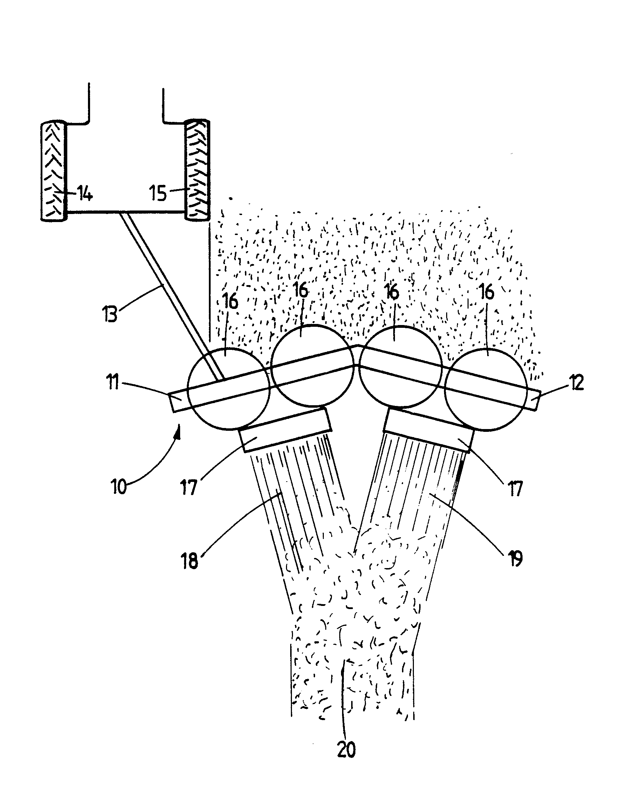

In accordance with the invention and as shown in one example in the accompanying drawing, the mowing machine comprises a V-shaped frame 10 arranged so that the apex of the vee will be foremost, having regard to the direction of travel, as the machine is traversed over the standing crop. Mounted on each of the arms 11 and 12 of said frame are at least two cutting units in the form of drum-type rotatable cutters 16 and connected to each of said arms is a crop conditioning means comprising an apparatus 17 having a pair of doors which are each hinged about a vertical axis, the hinged edges being remote from each other so that the drums can be set in a position in which their inner, adjacent, edges also extend vertically but spaced from each other to form a gap or opening of variable widths through which the cut crop will in use be expelled, the two streams of cut crop so expelled from said pair of crop conditioning apparati converging to form a single swath.

## "MOWING MACHINE"

### TECHNICAL FIELD

This invention relates to a mowing machine which is intended for use in cutting grass or other crops (hereinafter referred to for convenience as grass) and which is of the kind comprising a plurality of cutting units together with conditioning means which are disposed behind the cutting units and which act in use to intercept cut material projected rearwardly from the cutting units in order that such material can be formed into a neat and "fluffy" swath which can then be left to dry before collection is effected.

### BACKGROUND ART

The aforesaid cutting units may be of the rotatable kind and in this event each unit may be of the drum type in which case the unit is supported and driven from above or alternatively each unit may be of the disc type where the unit is driven from below and mounted on a supporting bar which engages the ground. Each type of machine known hitherto has certain disadvantages. Thus, with the known drum type mowers difficulties may be experienced in teasing out the very dense and narrow swath that is produced by the drum type cutters whereas with the disc type cutters difficulties can be experienced in condensing the cut swath sufficiently to ensure efficient collection. The objection of the present invention is to provide an improved form of mowing machine which, although capable of cutting a relatively wide swath, will nevertheless produce a single, open-textured windrow which will be easy to collect when it is sufficiently dry to do so.

### DISCLOSURE OF INVENTION

In accordance with the invention there is provided a mowing machine comprising a frame of generally V-shaped configuration which is adapted to be traversed over a crop which is to be cut with the apex of the vee foremost, said frame supporting, on each arm of the V-shaped frame at least two drum type rotatable cutters and there being associated with each of said arms crop conditioning means which is arranged to collect and condense cut crop from the drum cutters mounted on the associated arm and direct such condensed cut crop rearwardly and inwardly towards the longitudinal axis of the machine, the arrangement being such that the conditioning means associated with both arms of the frame together form a single condensed swath which is disposed substantially centrally with respect to said longitudinal axis of the machine.

A mowing machine as defined in the preceding paragraph may be arranged to be towed behind, and to one side of, an agricultural tractor or alternatively it may be connected to a tractor so as to project forwardly therefrom and in the latter case the machine would preferably itself be disposed centrally with respect to the longitudinal axis of the tractor and would engage the standing crop ahead of the tractor so that the swath which is formed by the cutting operation will lie along said longitudinal tractor axis to permit the wheels of the tractor to straddle the swath as it is formed.

### BRIEF DESCRIPTION OF DRAWING

The invention will now be more particularly described with reference to the accompanying drawing which is a schematic plan view showing one example of a mowing machine in accordance with the invention.

### MODE FOR CARRYING OUT THE INVENTION

Referring now to the drawing there is shown therein one form of mowing machine which is constructed in accordance with the present invention, such machine being intended to cut a standing crop such as grass and then form the cut crop into a swath which can be later collected from the field. As shown in the drawing said machine has a frame 10 which is of generally V-shaped configuration so as to comprise a pair of arms 11 and 12. In one configuration said frame 10 is attached to suitable towing means 13 which is itself attached to the rear of an agricultural tractor whose two rear wheels are indicated by reference numerals 14 and 15. The machine is thus adapted to be towed by said tractor over the field in which the standing crop is growing, the arrangement being such that the apex of the aforementioned V-shaped frame 10 will be foremost having regard to the direction of travel.

Mounted on each of said arms 11 and 12 are at least two cutting units in the form of a pair of drum-type rotatable cutters 16, said cutters being supported from their upper ends by said frame 10 and being adapted to be rotated about vertical axes by any convenient means (not shown) which are driven from the conventional power take-off mechanism of the tractor.

Also associated with each arm II and I2 of the machine frame IO is a conditioning unit I7 which may be of any known kind such as for example apparatus which incorporates a pair of doors which are each hinged about a vertical axis, the hinged edges of the two doors being remote from each other and the doors being adjustable in order to vary the width of the opening or gap between their inner, adjacent, vertical edges. Thus in operation cut crop which is cut from the standing crop by the aforesaid drum type cutters I6 will be thrown rearwardly into the respective conditioning units I7 and as shown where each arm II and I2 is provided with two cutters I6 then both these cutters will direct their cut crop into the associated conditioning unit I7. As will be seen from the drawing the two conditioning units I7 are so arranged that the cut crop issuing from the rear of each unit will be projected in a direction which is inclined to the forward direction of travel and which is directed inwardly towards the longitudinal axis of the mowing machine. The two streams of cut crop (which will initially be airborne) will thus be directed in directions which converge with each other before they are deposited on the ground (said converging streams being indicated by reference numerals I8 and I9) to form a single generally "fluffy" swath 20 which can then either be subjected to further conditioning operations or alternatively and if necessary left to dry before it is collected by any known collecting means such as a conventional baler.

In the above described embodiment the mowing machine is towed behind and somewhat to one side of the tractor but in an alternative arrangement the mowing machine can be carried from a suitable frame or supporting arms extending forwardly from the front of the tractor. In this case said mowing machine may be arranged so that it is disposed centrally in a position in which its longitudinal axis is either coincident or very close to the longitudinal axis of the tractor itself. The cutting units I6 will then cut standing crop ahead of the tractor but will again form a single "fluffy" swath 20 which will then be laid on the ground in such a position that the tractor wheels I4 and I5 will pass along either side of the swath as the tractor moves forwardly. In either case however the V-shaped form of the frame of the mowing machine ensures good stability of the machine and good ground following characteristics. Furthermore whilst it is envisaged that a mowing machine in accordance with the present invention can incorporate, if desired, more than two cutting units on each arm of the frame, nevertheless the use of two drum type cutters on each arm will overall form a mowing machine which is adapted to make a relatively wide cut (such as a cut which is IO′ 6" wide) whilst still restricting the overall diameter of each drum type cutter to a relatively modest diameter which will ensure that the power requirement for driving the cutter drums is kept to a reasonable level.

## Claims

I. A mowing machine comprising a frame of generally V-shaped configuration which is adapted to be traversed over a crop which is to be cut with the apex of the vee foremost, said frame supporting, on each arm of the V-shaped frame at least two drum type rotatable cutters and there being associated with each of said arms crop conditioning means which is arranged to collect and condense cut crop from the drum cutters mounted on the associated arm and direct such condensed cut crop rearwardly and inwardly towards the longitudinal axis of the machine, the arrangement being such that the conditioning means associated with both arms of the frame together form a single condensed swath which is disposed substantially centrally with respect to said longitudinal axis of the machine.

2. A mowing machine as claimed in Claim I and which is adapted to be towed behind and to one side of an agricultural tractor.

3. A mowing machine as claimed in Claim I and which is adapted to be connected to an agricultural tractor so as to project forwardly thereof in a position in which it is disposed centrally with respect to the longitudinal axis of the tractor.

4. A mowing machine as claimed in any one of the preceding claims wherein each of said crop conditioning means comprises apparatus having a pair of doors which are each hinged about a vertical axis, and the doors being adjustable for the purpose of varying the width of the opening or gap between their inner, adjacent, vertical edges, the arrangement being such that cut crop directed into each of said apparati by the associated cutters will be expelled therefrom through the aforesaid openings or gaps.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | AT-B- 288 756 (MASCHINENFABRIK FAHR A.G.) <br> * whole document * | 1-3 | A 01 D 34/66 |
| | --- | | |
| Y | AT-B- 288 757 (ASSING) <br> * figure 2 * | 1-3 | |
| A | | 4 | |
| | --- | | |
| Y | EP-A-0 122 903 (COCKERILL SAMBRE) <br> * figure 3 * | 3 | |
| | ----- | | |

TECHNICAL FIELDS
SEARCHED (Int. Cl.4)

A 01 D 34/00

The present search report has been drawn up for all claims

| Place of search | Date of completion of the search | Examiner |
|---|---|---|
| BERLIN | 09-04-1987 | SAMWEL P.N. |